# EUROPÄISCHE PATENTSCHRIFT

(11) **EP 2 228 296 B1**
(45) Veröffentlichungstag und Bekanntmachung des Hinweises auf die Patenterteilung: **21.05.2014**
(21) Anmeldenummer: 10155893.0
(22) Anmeldetag: 09.03.2010
(51) Int. Cl.: B64C 1/20, B64C 1/22, B64C 1/00, B64D 9/00, B64C 1/18

(54) **Frachtraumboden für einen Frachtraum eines Flugzeugs sowie Verfahren zur Montage eines solchen**
Freight area base for a freight area of an airplane and method for fitting same
Sol de soute pour une soute d'avion ainsi que procédé de montage de celui-ci

(30) Priorität: 10.03.2009 DE 102009012424
(43) Veröffentlichungstag der Anmeldung: 15.09.2010
(73) Patentinhaber: Telair International GmbH, 83714 Miesbach (DE)
(72) Erfinder: Huber, Thomas, 83727, Schliersee (DE); Holzner, Richard, 83071, Stephanskirchen (DE)
(74) Vertreter: Bohnenberger, Johannes

(56) Entgegenhaltungen:
- EP-A2- 1 714 868
- WO-A1-2006/051235
- WO-A1-2007/057411
- DE-A1- 19 720 224

## Beschreibung

Die Erfindung betrifft einen Frachtraumboden eines Flugzeugs nach dem Oberbegriff des Patentanspruches 1 sowie ein Verfahren zur Montage eines Frachtraumbodens.

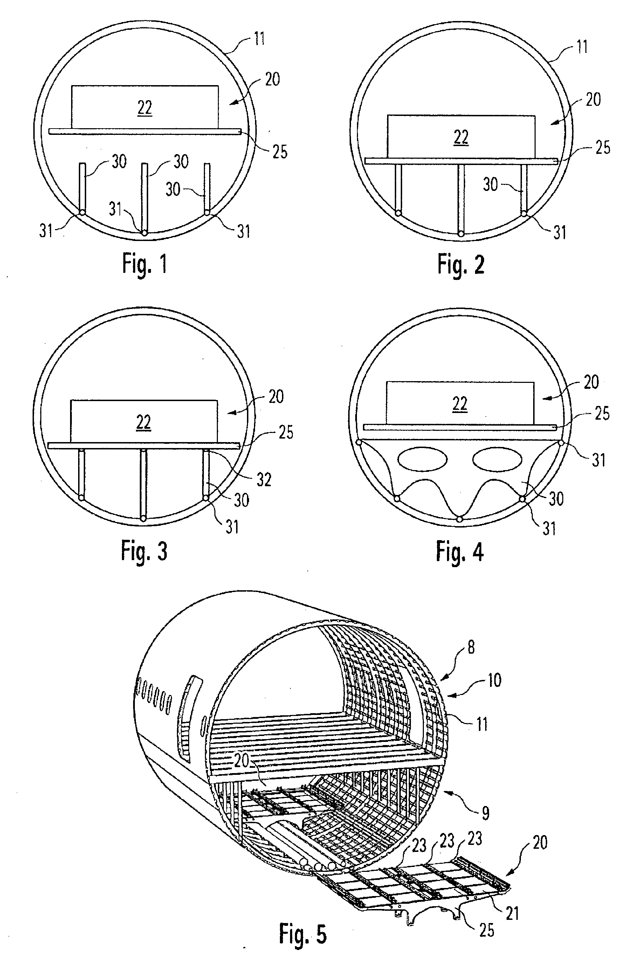

Aus der EP 1 646 558 B1 sind ein Frachtraumboden sowie ein Verfahren zur Montage eines solchen bekannt, wobei der Frachtraumboden aus Modulen aufgebaut ist, die außerhalb des Flugzeugs gefertigt werden. Schematisiert ist dies in der beiliegenden Fig. 5 gezeigt. Das Bodenmodul 20 umfasst Paneele 21 als begehbare Flächenelemente, sowie Rollenbahnen 23, welche mit Stützelementen 25 fest verbunden sind. Die Stützelemente 25 werden nach dem Einfahren eines Bodenmoduls 20 in einen Frachtraum 9 eines Flugzeuginnenraums 10, der unterhalb eines Passagierraums 8 liegt, mit einer Außenhaut 11 des Flugzeugs fest verbunden. Die Montage der Bodenmodule 20 ist relativ aufwändig.

Ein Frachtraumboden der hier angesprochenen Art ist auch aus der EP 1 714 868 A2 bekannt, die den nächstlegenden Stand der Technik darstellt und den Oberbegriff des Anspruchs 1 offenbart.

Der Erfindung liegt die Aufgabe zu Grunde, einen Frachtraum und ein Verfahren zur Herstellung eines solchen dahin gehend aufzuzeigen, dass eine vereinfachte Montage der Bodenmodule ermöglicht wird.

Diese Aufgabe wird durch einen Frachtraumboden nach Anspruch 1 und ein Verfahren nach Anspruch 4 gelöst.

Insbesondere wird die Aufgabe durch einen Frachtraumboden für einen Frachtraum eines Flugzeugs gelöst, umfassend Paneele oder dergleichen Flächenelemente zum Befestigen von Rollenelementen, Kugelelementen, Riegelelementen, PDU's oder dergleichen Funktionselementen, Floorbeams oder dergleichen Stützelemente, welche die flächigen Bodenelemente unterstützen, wobei die Bodenelemente mit den Stützelementen zu vorgefertigten Bodenmodulen fest verbunden und die Bodenmodule in das Flugzeug einbaubar sind, gesonderte Tragelemente zum Abstützen der Bodenmodule an und zum Verbinden der Bodenmodule mit einem Körper oder einer Haut des Flugzeugs , wobei die Tragelemente vor einem Einbau der Bodenmodule in das Flugzeug mit dem Körper oder der Haut des Flugzeugs und beim Einbau der Bodenmodule in das Flugzeug mit den Stützelementen verbindbar sind, wobei die Tragelemente Positionsausgleichselemente umfassen, welche einen Toleranzausgleich insbesondere in Längsrichtung des Flugzeugs ermöglichen.

Verfahrensmäßig wird die Aufgabe durch ein Verfahren zur Montage eines derartigen Frachtraumbodens in einem Flugzeug gelöst, umfassend die Schritte:
- Herstellen von Bodenmodulen außerhalb des Flugzeugs;
- Einbau von Tragelementen in das Flugzeug;
- Einbringen einzelner Bodenmodule in das Flugzeug;
- Verbinden der Bodenmodule mit den Tragelementen.

Ein wesentlicher Punkt der Erfindung liegt darin, dass die Tragelemente - anders als in der oben genannten Druckschrift beschrieben - ohne räumliche Beengung des Montagepersonals im Flugzeug montierbar sind. Dies gibt eine wesentliche Erleichterung bei der Montage.

Insbesondere dann, wenn die Bodenmodule nicht flach, wie in Fig. 5 gezeigt, aufgebaut sind, sondern Aufbauten enthalten, die bis unter die Decke des Frachtraums reichen, ist dennoch ein kollisionsfreier Einbau möglich.

Die Tragelemente können als Einzelpfosten ausgebildet sein, die nach dem Einbringen eines Bodenmoduls mit diesem, insbesondere mit dessen quer zur Flugzeuglängsachse verlaufenden Stützelementen verbunden werden können. Alternativ ist es möglich, derartige Tragelemente auch zu Gruppen, insbesondere zu einer einzigen Gruppe zusammen zu fassen, zu fassen, so dass die Tragelemente einheitlich gehandhabt werden können. Auch dies erleichtert die Montagearbeit und kann auch zu einer Erhöhung der Stabilität beitragen.

Weiterhin ist es von Vorteil, wenn die Tragelemente eine Struktur aufweisen, welche nach Verbindung mit den Stützelementen diese verstärken. Dies ist insbesondere dann sicherzustellen, wenn die Tragelemente zu einer Gruppe zusammengefasst sind. Dadurch können die Stützelemente der Module weniger solide, also auch leichter ausgebildet werden.

Die Erfindung wird nachfolgend anhand von Ausführungsbeispielen näher erläutert. Hierbei zeigen
- Fig. 1 eine erste Ausführungsform der Erfindung nach Einbringen eines Bodenmoduls in einen Frachtraum,
- Fig. 2 die Anordnung nach Fig. 1 nach dem Aufsetzen des Bodenmoduls auf Tragelemente;
- Fig. 3 die Anordnung nach Fig. 2 im fertig montierten Zustand,
- Fig. 4 eine alternative Ausführungsform der Erfindung mit zusammengefassten Tragelementen und
- Fig. 5 eine bekannte Anordnung, wie sie in der EP 1 646 558 B1 beschrieben ist.

In der nachfolgenden Beschreibung werden für gleiche und gleich wirkende Teile dieselben Bezugsziffern verwendet.

In den Fig. 1 bis 3 ist - stark schematisiert und in den Größenverhältnissen sicherlich nicht korrekt - gezeigt, wie ein Bodenmodul 20, welches ein Stützelement (Floorbeam) 25 und darauf befestigt einen Aufbau 22 umfasst.

In dieser Darstellung sind im Flugzeug bereits Tragelemente 30 mit unteren Verbindungseinrichtungen 31 an der Außenhaut 11 des Flugzeugs befestigt.

Nach dem Aufsetzen des Bodenmoduls 20 auf die Oberenden der Tragelemente 30 (siehe Fig. 2) werden die Tragelemente 30 mit oberen Verbindungseinrichtungen 32 mit den Stützelementen 25 verbunden, wie dies in Fig. 3 angedeutet ist. Aus diesen Darstellungen geht hervor, dass die Montage der Tragelemente 30 innerhalb des Flugzeugs, die ja vor Einbringen der Module 20 erfolgt, dem Montagepersonal sehr viel mehr Platz lässt als bei Verwendung der in Fig. 5 gezeigten herkömmlichen Bodenmodule.

Ein weiterer, wesentlicher Vorteil dieser Anordnung liegt darin, dass dann, wenn der Aufbau 22, des Bodenmoduls 20 sehr hoch ist, ein Einbringen konventionell gefertigter Bodenmodule 5 in den Frachtraum nur bedingt möglich ist bzw. nur niedrigere Aufbauten 22 zulässt.

### Bezugszeichenliste

- 8: Passagierraum
- 9: Frachtraum
- 10: Flugzeuginnenraum
- 11: Außenhaut
- 20: Bodenmodul
- 21: Paneel
- 22: Aufbau
- 23: Rollenbahn
- 25: Stützelement/Floorbeam
- 30: Tragelement
- 31: untere Verbindungseinrichtung
- 32: obere Verbindungseinrichtung

## Patentansprüche

1. Frachtraumboden für einen Frachtraum (9) eines Flugzeugs,
umfassend
- Paneele oder dergleichen flächige Bodenelemente (22) zum Befestigen von Rollenelemente, Kugelelementen, Riegelelementen oder dergleichen Funktionselementen,
- Floorbeams (25) oder dergleichen Stützelemente, welche die flächigen Bodenelemente (22) unterstützen, wobei die Bodenelemente (22) mit den Stützelementen (25) zu vorgefertigten Bodenmodulen (20) fest verbunden und die Bodenmodule (20) in das Flugzeug einbaubar sind,
- gesonderte Tragelemente (30) zum Abstützen der Bodenmodule (20) an und zum Verbinden der Bodenmodule (20) mit einem Körper oder einer Haut (11) des Flugzeugs , wobei die Tragelemente (30) vor einem Einbau der Bodenmodule (20) in das Flugzeug mit dem Körper oder der Haut (11) des Flugzeugs und beim Einbau der Bodenmodule (20) in das Flugzeug mit den Stützelementen (25) verbindbar sind,
**dadurch gekennzeichnet, dass**
die Tragelemente (30) Positionsausgleichselemente umfassen, welche einen Toleranzausgleich insbesondere in Längsrichtung des Flugzeugs ermöglichen.

2. Frachtraumboden nach einem der vorhergehenden Ansprüche,
**dadurch gekennzeichnet, dass**
mehrere Tragelemente (30) zu einheitlich handhabbaren Körper zusammengefasst sind.

3. Frachtraumboden nach einem der vorhergehenden Ansprüche,
**dadurch gekennzeichnet, dass**
die Tragelemente (30) eine, die Stützelemente (25) unterstützende Struktur aufweisen.

4. Verfahren zur Montage eines Frachtraumbodens nach einem der Ansprüche 1-3 in einem Flugzeug,
umfassend die Schritte
- Herstellen von Bodenmodulen außerhalb des Flugzeugs;
- Einbau von Tragelementen in das Flugzeug;
- Einbringen einzelner Bodenmodule in das Flugzeug;
- Verbinden der Bodenmodule mit den Tragelementen.

## Claims

1. Cargo hold floor for a cargo hold (9) of an aircraft, comprising
- panels or like planar floor elements (22) for attachment of roller elements, ball elements, locking elements or like functional elements,
- floor beams (25) or like support elements, which support the planar floor elements (22), the floor elements (22) being fixedly joined to the support elements (25) to form prefabricated floor modules (20) and the floor modules (20) being arranged to be installed in the aircraft,
- separate bearing elements (30) for supporting the floor modules (20) on and for joining the floor modules (20) to a body or a skin (11) of the aircraft, the bearing elements (30) being arranged to be joined to the body or the skin (11) of the aircraft prior to installation of the floor modules (20) in the aircraft and, on installation of the floor modules (20) in the aircraft, being arranged to be joined to the support elements (25),
**characterised in that**
the bearing elements (30) comprise position-compensating elements which allow tolerance compensation especially in the longitudinal direction of the aircraft.

2. Cargo hold floor according to any one of the preceding claims, **characterised in that**
a plurality of bearing elements (30) are combined to form a body that can be handled as a unit.

3. Cargo hold floor according to any one of the preceding claims, **characterised in that**
the bearing elements (30) have a structure that supports the support elements (25).

4. Method of mounting a cargo hold floor according to any one of claims 1 to 3 in an aircraft,
comprising the steps of:
- producing floor modules outside the aircraft;
- installing bearing elements in the aircraft;
- introducing individual floor modules into the aircraft;
- joining the floor modules to the bearing elements.

## Revendications

1. Sol de soute pour une soute (9) d'un avion, comprenant:
- des panneaux ou des éléments de sol plats analogues (22) pour la fixation d'éléments à galets, d'éléments à billes, d'éléments de verrouillage ou d'éléments fonctionnels analogues,
- des poutres de sol (25) ou des éléments de support analogues, qui soutiennent les éléments de sol plats (22), les éléments de sol (22) étant assemblés solidairement aux éléments de support (25) en modules de sol préfabriqués (20) et les modules de sol (20) pouvant être montés dans l'avion,
- des éléments porteurs séparés (30) pour supporter les modules de sol (20) sur et pour assembler les modules de sol (20) à un corps ou à une peau (11) de l'avion, les éléments porteurs (30) pouvant être assemblés au corps ou à la peau (11) de l'avion avant un montage des modules de sol (20) dans l'avion et aux éléments de support (25) lors du montage des modules de sol (20) dans l'avion,
**caractérisé en ce que** les éléments porteurs (30) comprennent des éléments de compensation de position, qui permettent une compensation de tolérances en particulier dans la direction longitudinale de l'avion.

2. Sol de soute selon la revendication précédente, **caractérisé en ce que** plusieurs éléments porteurs (30) sont rassemblés en un corps manipulable en bloc.

3. Sol de soute selon l'une quelconque des revendications précédentes, **caractérisé en ce que** les éléments porteurs (30) présentent une structure soutenant les éléments de support (25).

4. Procédé pour le montage d'un sol de soute selon l'une quelconque des revendications 1 à 3 dans un avion, comprenant les étapes suivantes:
- fabriquer des modules de sol à l'extérieur de l'avion;
- monter des éléments porteurs dans l'avion;
- introduire des modules de sol individuels dans l'avion;
- assembler les modules de sol aux éléments porteurs.
